# EUROPEAN PATENT APPLICATION

(11) **EP 4 755 538 A1**
(43) Date of publication of application: **10.06.2026**
(21) Application number: 25220564.6
(22) Date of filing: 03.12.2025
(51) Int. Cl.: B09B 3/40, C10B 47/00, F23G 5/027, F26B 17/18, F27B 9/00, F27B 9/08, F27B 9/14, F27B 9/30, F27D 99/00, C10B 47/44, B01J 6/00, B01J 19/20, C10B 53/00, C10B 7/10

(54) **APPARATUS FOR THE HEAT TREATMENT OF MATERIALS**

(30) Priority: 03.12.2024 IT 202400027270
(71) Applicant: Enecolab S.r.l., 34015 Muggia (TS) (IT)
(72) Inventor: Marquardt, Lucio, 34138 Trieste (TS) (IT); Crevatin, Renzo, 34015 Muggia (TS) (IT); Biasi, Renzo, 34141 Trieste (TS) (IT)
(74) Representative: Petraz, Gilberto Luigi

(57) **Abstract**

Apparatus (10; 10') for the heat treatment of materials (M) comprising both a reaction chamber (11) configured to receive materials (M) to be treated and provided with an advance device (15) configured to make said materials (M) fed by at least one feed duct (16) advance toward at least one outlet duct (17) for the disposal of the solid component resulting from the pyrolysis of the treated materials (M), and also a furnace (12) having a containing chamber (13) which at least partly encloses said reaction chamber (11) and is configured to heat the reaction chamber (11) and said materials (M) present therein by thermal conduction, generating gaseous substances (S) therein. The advance device (15) comprises a helical structure formed by a plurality of turns (20), and a central shaft (21), internally hollow so that it can receive said gaseous substances (S) inside it and rotatable around a central axis (AC) so as to make said turns (20) rotate, thus making said materials (M) advance.

## Description

### FIELD OF THE INVENTION

The present invention concerns an apparatus for the heat treatment of materials, which can be solid, semi-solid and/or liquid, and comprise at least one organic-origin component.

For example, the apparatus can be disposed downstream of any work cycle whatsoever, in the industrial, agricultural, or civil sectors, which produces residue material having a non-recoverable or non-recyclable organic component. In the present description, the expression "organic component" indicates that the material has carbon atoms in a shape available to bind with other atoms during suitable chemical reactions.

In some embodiments of the present invention, the thermal treatment apparatus can be integrated into plants for recycling waste materials and/or refuse that have to be treated, disposed of, and/or rendered inert, that is, in which there is provided a pyrolysis and/or gasification of such materials. Furthermore, the apparatus can be used to dry materials to be treated in the food industry or the wood processing industry.

### BACKGROUND OF THE INVENTION

Apparatuses for the heat treatment of materials through the use of a heat vector are known. Some of these apparatuses comprise a reaction chamber provided with means for advancing the materials to be treated in a reduced oxygen atmosphere.

Known apparatuses usually comprise a furnace having a containing chamber which accommodates the heat vector, and which at least partly covers the reaction chamber so that the flow of the heat vector is separated from the flow of the materials to be treated.

In known apparatuses, the advance means usually comprise a continuous helical member, associated with a rotation shaft rotatable around its own longitudinal axis. This shaft sets the helical member in rotation which, with this rotary motion, makes the material advance from an inlet to an outlet of the reaction chamber.

The reaction chamber is usually cylindrical, and the helical member is coaxial to a barycentric axis of this chamber. In addition, the size of the helical member is such as to occupy almost the entire section of the reaction chamber, leaving a minimal gap to guarantee the respective rotation.

The reaction chamber can be heated by means of electrical thermistors or with induction systems, or by means of the heat vector that circulates in the containing chamber. Typically, heat is transmitted in the chamber by thermal conduction from the outside to the inside of the reaction chamber, heating the materials to be treated while they advance.

In any case, also as a function of the nature of the materials themselves, the heating of the materials to be treated can give origin to gaseous substances inside the reaction chamber. These gaseous substances can be potentially harmful and/or polluting, therefore the reaction chamber is isolated from the containing chamber, in such a way as to prevent any leakage into the surrounding environment and at the same time keep the flow of the heat vector separate from the flow of the material subjected to the thermochemical reaction.

A disadvantage of known apparatuses is that the sizes of the aforementioned gap are very small and do not facilitate the passage of the gaseous substances produced by the reaction, which can carry hydrocarbons in the form of micro-droplets of oils and/or waxes in the liquid phase, the stagnation of these substances in the reaction chamber leading to an incorporation of these components in the solid in transformation, degrading the quality of the final solid residue.

Therefore, it is often necessary to provide an appropriate space through which the gaseous substances that are generated during the treatment process can transit.

Another disadvantage derives from this, namely, that the materials to be treated can occupy a volume of the chamber that is significantly smaller than the entire volume of the reaction chamber itself.

From Italian patent no. 102018000003201 filed on behalf of the Applicant, an apparatus for the heat treatment of materials is known in which one or more holes for the passage of the gaseous substances are provided near the rotation shaft. This solution, although very valid, is not easy to implement. Furthermore, by making the passage holes near the rotation shaft, it can be necessary to insert reinforcement elements on the helical member, which are connected to the rotation shaft and make manufacturing the helical member itself more complex.

Another solution known in the art is disclosed in DE 102007056907 A1, in which the reactor for the heat treatment of the materials houses a helical member that advances the material to be treated which has a variable pitch: several sections of this member disposed longitudinally one after the other along the axis of the reactor have a different pitch from each other.

This solution is constructively very complex because manufacturing a helical member in which the turns are axially spaced apart from each other by a variable pitch poses significant design challenges, requiring particular manufacturing techniques that make the solution too expensive.

There is therefore the need to perfect a heat treatment apparatus that can overcome at least one of the disadvantages of the state of the art.

To do this, it is necessary to solve the technical problem of providing an apparatus for the heat treatment of materials that facilitates the disposal of the gaseous substances without the use of passage holes made near the rotation shaft.

In particular, one purpose of the present invention is to provide an apparatus for the heat treatment of materials that allows the gaseous substances generated during the heat treatment to be discharged rapidly and efficiently.

A further purpose of the present invention is to optimize thermal efficiency, allowing for significant energy savings compared to prior art solutions.

Another purpose of the present invention is to provide a highly efficient apparatus for the heat treatment of materials, in which the heating of the materials to be treated is optimized.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the technical problem described above in a new and original way, also achieving considerable advantages compared to the state of the prior art, a treatment apparatus according to the present invention for treating materials comprises both a reaction chamber configured to receive materials to be treated and provided with an advance device configured to make the materials fed by at least one feed duct advance toward at least one outlet duct for the disposal of the solid component resulting from the pyrolysis of the treated materials, and also a furnace having a containing chamber which at least partly encloses the reaction chamber and is configured to heat the reaction chamber and the materials present therein by thermal conduction, generating gaseous substances therein.

In accordance with one aspect of the present invention, the advance device comprises a helical structure formed by a plurality of turns and a central shaft to which the turns are attached, which is rotatable around a central axis and able to make the turns rotate, thus making the materials advance.

In accordance with one aspect of the present invention, the central shaft is internally hollow and is configured to receive the gaseous substances which are generated in the reaction chamber, wherein the central shaft comprises at least one through aperture through which the gaseous substances can enter inside the central shaft.

In accordance with one aspect of the present invention, inside the central shaft there is disposed a movement device comprising both a continuous helical structure formed by a plurality of turns and also a longitudinal bar, to which the turns are attached, which is parallel, coaxial and rotatable around the central axis to set the turns in motion.

According to another aspect of the present invention, there is provided a method for the heat treatment of materials in an apparatus as defined above, comprising the steps of:
- feeding the materials into a reaction chamber by means of a feed duct,
- by means of an advance device comprising a helical structure formed by a plurality of turns, making the materials advance in the reaction chamber toward an outlet duct through which the solid component resulting from the pyrolysis of the treated materials is disposed of, wherein making the materials advance provides to make a central shaft, to which the turns are attached, rotate around a central axis, the method also comprising the following steps:
- conveying the gaseous substances inside a central shaft of the advance device, to which the turns are attached,
- directing a flow of the gaseous substances conveyed inside the central shaft in counter-current to the direction of advance of the materials in the reaction chamber.

Doing so achieves at least the advantage of allowing for an efficient disposal of the gaseous substances that develop inside the reaction chamber, avoiding potential risk situations inside the treatment apparatus and/or problems of contamination of the solid residue generated by the process.

Furthermore, the apparatus and method according to the present invention advantageously allow to use the heat emitted by the gaseous substances, which are at the high temperatures present in the reaction chamber, to preheat the material to be treated.

In fact, the flow of the gaseous substances is directed toward the zone in which the materials are coldest, that is, the zone in which they enter the reaction chamber through the feed duct.

By exploiting the heating of the gaseous substances already available in the reaction chamber, it is advantageously possible to achieve significant energy savings, even in the order of approximately 30%, compared to the energy that would be required to bring the materials to the same temperature without using the heat emitted by the gaseous substances.

It is immediately evident that, thanks to the apparatus and method of the present invention, a smaller amount of external energy to be transferred to the material is required in order to bring it to the temperatures typical of the heat treatment in question.

Advantageously, the presence of the movement device disposed inside the central shaft allows to significantly improve the heat exchange between the gaseous substances and the material to be treated, as well as the operational stability.

Furthermore, the movement device also allows to facilitate the displacement of any residues of solid materials that are present inside the central shaft, since they are taken inside the latter by the gaseous substances, toward the outlet duct.

Another advantage of the present invention is that the apparatus remains compact, while integrating the heat exchange functionality between the gaseous substances and the material being treated, since no additional components external to the reaction chamber are required to actuate it.

A further advantage of the present invention is that the effective temperature of the gaseous substances exiting from the additional outlet duct is lower than in solutions known in the art, which reduces the energy expenditure in the subsequent step of cleaning/cooling the gaseous substances produced, as well as an improved management of the seals sensitive to high temperatures, which last longer and therefore require less frequent maintenance and lower correlated costs.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic front view of a cross-section of an apparatus for treating materials according to some embodiments of the present invention;
- figs. from 1A to 1C show variants of an advance device integrated into the apparatus according to the present invention;
- fig. 2 is a three-dimensional view of a reaction chamber comprised in the apparatus of fig. 1;
- fig. 2A is an enlarged detail of fig. 2;
- fig. 3 is a partial, schematic section view of the reaction chamber of fig. 2;
- fig. 3A is a schematic, three-dimensional view of an advance device disposed inside the reaction chamber of fig. 2;
- fig. 4 is a view like that of fig. 3, showing a variant of the reaction chamber;
- fig. 5 is a schematic front view like that of fig. 1, illustrating a cross-section of an apparatus for treating materials according to another embodiment of the present invention;
- figs. 6-8 are schematic front views of a reaction chamber contained in the apparatus of fig. 5, in which different versions of the arrangements of the feed ducts for the materials to be treated can be seen;
- fig. 9 is a schematic lateral view like that of fig. 4, illustrating a cross-section of the reaction chamber shown in fig. 8.

We must clarify that the phraseology and terminology used in the present description, as well as the figures in the attached drawings also in relation as to how described, have the sole function of better illustrating and explaining the present invention, their purpose being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

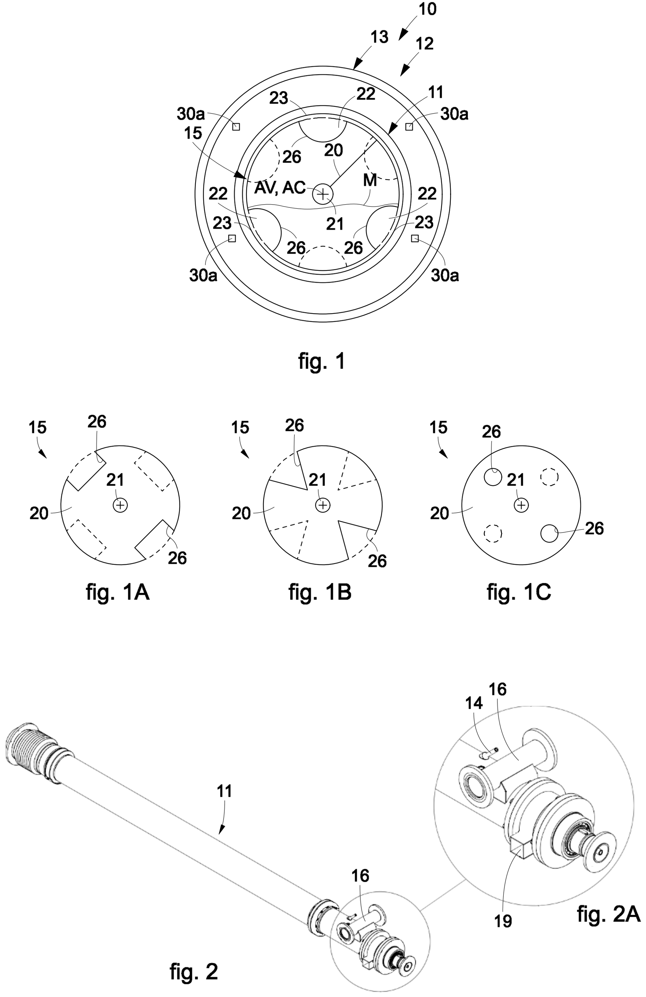

With reference to fig. 1, a heat treatment apparatus 10 according to the present invention is described, which is designed and usable to heat-treat materials M. The materials M to be treated can be solid, semi-solid and/or liquid, of organic or inorganic origin.

For example, the apparatus 10 can be used in a material recycling plant, not visible in the drawings, in which a pyrolysis and/or gasification of the materials is provided.

The apparatus 10 comprises a reaction chamber 11 configured to receive materials M to be treated, and a furnace 12 having a containing chamber 13 which at least partly encloses the reaction chamber 11.

The furnace 12 is configured to heat the reaction chamber 11 and the materials M present therein by thermal conduction. Following the pyrolysis reaction in the reaction chamber 11, gaseous substances S are generated.

The apparatus 10 comprises a feed duct 16 and an outlet duct 17 which are configured, respectively, to feed the materials M to be treated into the reaction chamber 11 and to allow the treated materials M to exit the reaction chamber 11.

The feed duct 16 and the outlet duct 17 are disposed in correspondence with opposite ends of the reaction chamber 11.

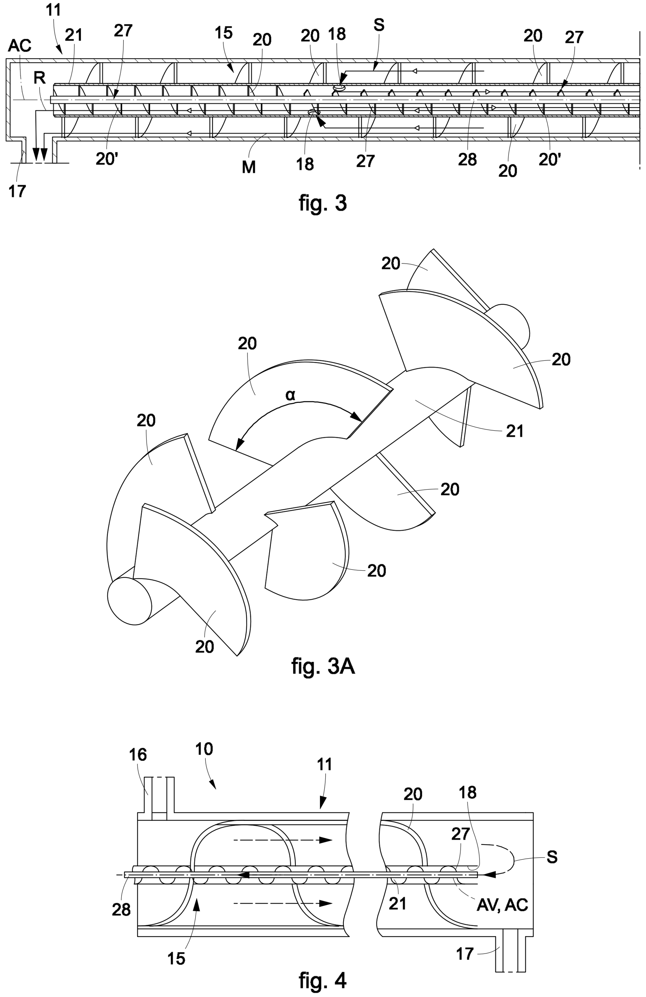

Inside the reaction chamber 11, as best seen in fig. 3, there is provided an advance device 15 configured to make the materials M to be treated advance from the feed duct 16 to the outlet duct 17.

The apparatus 10 also comprises an additional inlet duct 14, better visible in fig. 2A, configured to allow nitrogen to be introduced into the reaction chamber 11. In this way, the atmosphere inside the reaction chamber 11 is rendered inert and allows a pyrolysis reaction under anaerobic conditions.

In certain operating variants, the additional inlet duct 14 can also be used to introduce water or air or oxygen into the reaction chamber 11 so as to control the composition of the atmosphere within the reaction chamber 11 according to desired proportions, based on requirements.

The apparatus 10 also comprises an additional outlet duct 19 for the disposal of the gaseous substances S. As better visible in the enlargement of fig. 2A, the additional outlet duct 19 for the disposal of the gaseous substances S is disposed in proximity to the feed duct 16, therefore, in order to exit the reaction chamber 11, the gaseous substances S follow a path comprising a branch for them to return back toward the material inlet zone, as will be explained in more detail below.

The additional outlet duct 19 is communicating with the inside of the central shaft 21.

The advance device 15 comprises a continuous helical structure having a circular-shaped section formed by a plurality of turns 20. The reaction chamber 11 has a circular-shaped section having a first diameter D1 and the advance device 15 has a circular-shaped section having a second diameter D2, slightly smaller than the first diameter D1, such as to allow the rotation of the turns 20.

In addition, the advance device 15 comprises a central shaft 21 rotatable around a central axis AC, parallel to the longitudinal development of the reaction chamber 11 and able to make the turns 20 rotate, thus making the materials M to be treated advance.

Fig. 3A shows an advantageous embodiment of the advance device 15, in which the turns 20 are not continuous but are instead configured as baffles angularly offset with respect to each other. From a manufacturing point of view, the turns 20 can be seen as part of a single spiral, in which solid parts (the baffles) alternate with void parts. Each of these baffles can extend for an angle α comprised between 30° and 180°. The same angle can also apply to the extension of the empty space between two consecutive baffles.

This angle (both of the baffles and also of the empty spaces) can also be variable between different baffles, or different empty spaces, and not constant.

Reinforcing structures can be provided, which longitudinally connect two baffles disposed one after the other, wherein these reinforcing structures can extend parallel to the axis of the reaction chamber 11 and can be connected to the turns in a zone in proximity to their external peripheral edge, adjacent to the walls of the reaction chamber.

Such a configuration is advantageous because it significantly reduces the risk that the material M remains adhered to the turns, causing the blockage of the outflow of the material in its path from the feed duct 16 to the outlet duct 17.

This can happen due to the high temperatures present in the reaction chamber 11, in particular in the zones of such chamber in which temperatures of 350 °C - 400 °C or higher are reached. In particular, oils and waxes can form at these temperatures (in particular if there is a thermoplastic component in the material M) which define a viscous material that can cause the material M to adhere to the turns.

The central shaft 21 is preferably hollow, so as to receive the gaseous substances S inside it, as will be explained in more detail below. The central shaft 21 comprises at least one open end (figs. 3 and 4).

A movement device 27 is disposed inside the central shaft 21, also comprising a continuous helical structure completely similar to that of the advance device 15, but of course scaled so that its sizes are compatible with the volume inside the central shaft 21.

The movement device 27 comprises a continuous helical structure having a circular-shaped section and formed by a plurality of turns 20' and a longitudinal bar 28, to which the turns 20' are attached. The longitudinal bar 28 is parallel and coaxial to the central axis AC and is rotatable around this central axis AC.

As will be explained below with reference to the operation of the apparatus 10, the movement device 27 allows to facilitate the outflow of the gaseous substances S inside the central shaft 21, and possibly also the evacuation of any residues of solid materials taken inside the central shaft 21 by the flow of the gaseous substances S (arrow R in fig. 3).

The outflow of the gaseous substances S toward the additional outlet duct 19 occurs thanks to the pressure gradient that exists between the pressure inside the central shaft and the outside, from which the effect of conveying these substances toward the outside is achieved.

The solid material residues instead precipitate, impacting the turns 20' during the rotation of the movement device 27, and are therefore taken outside the central shaft 21 toward the outlet duct 17 from which they exit together with the solid residues M.

The central shaft 21 comprises one or more through apertures 18 (fig. 3) that place the inside of the central shaft 21 in communication with the reaction chamber 11 to allow the gaseous substances S that are generated in the reaction chamber 11 to enter the central shaft 21.

In one variant, shown in fig. 4, the central shaft 21 can be without holes and the gaseous substances S enter inside it through its open end, which defines a through aperture 18.

The advance device 15 and the reaction chamber 11 are both coaxial to the central axis AC.

The apparatus 10 comprises one or more additional apertures 26 defining passage means 22 for the gaseous substances S.

The apertures 26, semi-circular in shape, are preferably adjacent to the internal perimeter of the reaction chamber 11.

Preferably, the apertures 26 are disposed in such a way that the apertures 26 made on one turn 20 are angularly offset with respect to the apertures 26 made on the adjacent turn 20.

For example, in fig. 1, the apertures 26 on one turn 20 are drawn with a continuous line and the apertures 26 made on the turn 20 disposed immediately behind the one exposed to view are drawn with a dashed line.

It is clear that in other variants the apertures 26 can have other shapes and sizes suitable for the disposal of the gaseous substances S. For example, the apertures 26 can have a triangular, square, rectangular shape, etc., as shown in the variants of figs. 1A-1C. Also in these variants, an angular offsetting of the apertures 26 between two adjacent turns is provided, represented by the alternation between an aperture with a continuous line and one with a dashed line.

In the embodiment of fig. 1, as well as in the variants of figs. 1A and 1B, the apertures 26 are made along a segment (arc of a circle) of the external edge of the turns 20, while in the variant of fig. 1C, in which the apertures 26 have a circular shape, they are disposed in proximity to the external edge of the turns 20.

In some embodiments, not shown, the turns 20' of the movement device 27 which is disposed inside the central shaft 21 are also provided with the aforementioned apertures 26, which can take any of the shapes shown in figs. 1 and 1A-1C to allow the outflow of the gaseous substances S transiting inside the central shaft 21.

We must clarify that in the embodiment of fig. 3A, the apertures 26 are defined by the empty spaces between two adjacent baffles.

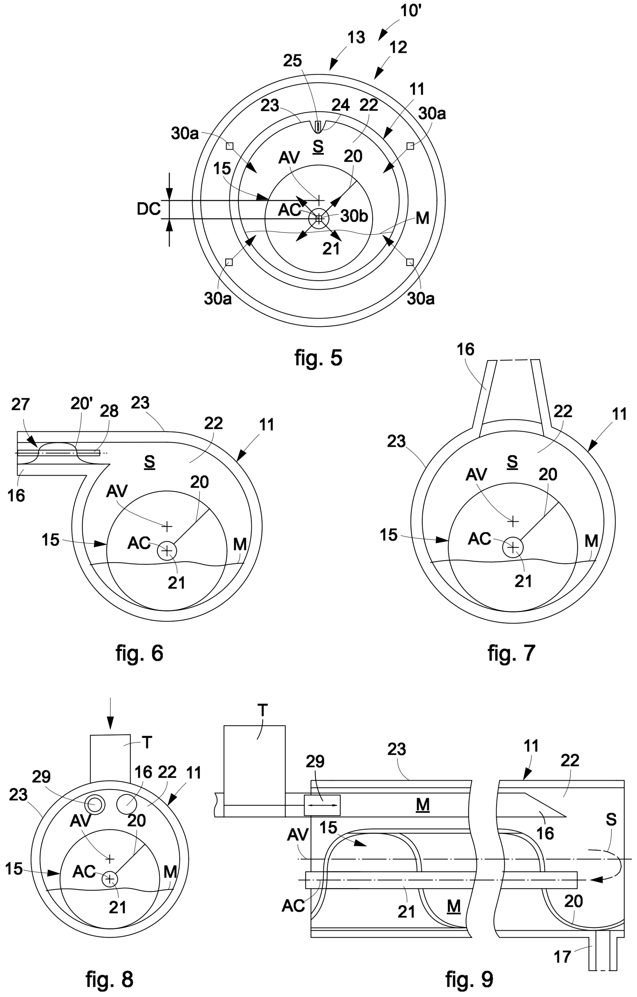

In accordance with another embodiment, shown in fig. 5, the apparatus, indicated in this case with reference 10', comprises a reaction chamber 11 with a circular-shaped section having a first diameter D1 and the advance device 15 has a circular-shaped section having a second diameter D2, smaller than the first diameter D1.

The advance device 15 is disposed eccentrically with respect to the reaction chamber 11; in fact, in this embodiment, a central axis AC of the central shaft 21 is vertically aligned and horizontally offset downward, by a certain eccentricity distance DC, with respect to a central axis AV of the reaction chamber 11.

The advance device 15 is disposed in correspondence with the lower zone of the reaction chamber 11 so as to leave at least the upper zone free, creating a contiguous fluidic passage for the disposal of the gaseous substances S, defining the passage means 22. In this embodiment, the turns 20 can therefore be without the apertures 26.

All the embodiments of the apparatus 10 can comprise at least one measurement sensor 25, preferably integrated in a special seating 24 created in the internal wall of the reaction chamber 11, as shown by way of example in the embodiment shown in fig. 5.

The measurement sensor 25 is able to measure the temperature above the advance device 15, in correspondence with the passage means 22 where the gaseous substances S are present, or conveyed. To this end, the seating 24 is created in a suitable position of the internal wall of the reaction chamber 11.

For example, the measurement sensor 25 is a thermocouple.

The arrangement of the measurement sensor 25 has the advantage of allowing to measure the temperature of the gaseous substances S in order to evaluate any critical issues and act immediately to resolve any situations at risk, as well as to allow to control and manage the temperature in the reaction area.

Figs. 6-8 show different variants of the apparatus 10' shown in fig. 2, in which different alternatives are provided for the feed duct 16 that takes the materials M into the reaction chamber 11.

In all these cases, it can be provided that the feed duct 16 is provided with a dispersing member, not visible in the drawings, to limit the heating that the materials M to be treated can undergo before entering the reaction chamber 11. This is necessary in the event that there are materials M present which cannot undergo heating outside the reaction chamber 11.

Furthermore, upstream of the feed duct 16 the materials M are fed by a loading device, not shown, flowing into the feed duct 16 so as to feed the materials M therein.

In fig. 6, the feed duct 16 is oriented perpendicular to the axes AC, AV and is connected to the reaction chamber 11 tangentially. Inside the feed duct 16A there can be provided a movement device 27 similar to that described above with reference to figs. 3 and 4, in which such device is disposed inside the central shaft 21.

In fig. 7, the feed duct 16 connects to an upper portion of the reaction chamber 11 and the materials M enter the latter by falling. In the example shown, the feed duct 16 has a truncated conical section, but in other versions, completely equivalent, it can obviously also have a cylindrical section.

In figs. 8 and 9, the feed duct 16 is disposed parallel to the longitudinal development of the reaction chamber 11. In the example shown, two feed ducts 16 are provided parallel to each other.

Each feed duct 16 accommodates one respective movement device 27, configured to make the materials M to be treated advance and introduce them into the reaction chamber 11. In this embodiment, the feed ducts 16 protrude into the reaction chamber 11 by a significant segment (fig. 9). This causes the feed ducts 16 to take the material M to a zone of the reaction chamber 11 which is at the reaction temperature.

This solution is indicated for any material (for example thermoplastic material) that could melt even during the feed path and therefore remain adhered to the movement device 27.

In the example shown, the movement device 27 is configured as a piston 29 sliding with alternating movement inside the respective feed duct 16, which therefore defines the sleeve inside which the piston 29 slides. Since this version provides two pistons 29, sliding within as many feed ducts 16, it is preferable that while one piston 29 advances, the other piston 29 retracts, so as to feed the material M continuously. The pistons 29 are sliding between a retracted end-of-travel position, in which the feed ducts 16 receive the material M from an overlying loading hopper T, and an advanced end-of-travel position, in proximity to the end of the feed ducts 16 protruding inside the reaction chamber 11. The feed ducts 16 are open upward, at least in the segment below the loading hopper T, so as to be able to receive the material.

The drive of the piston 29 can occur by means of a suitable actuator, not shown, which can be pneumatic, hydraulic, electrical or mechanical. The actuator can be of a type suitable to control the displacement speed of the piston 29.

In one variant, not shown, a single feed duct 16 can be provided, in which a respective piston 29 is movable.

In another variant, the movement device 27 comprises, instead of the piston 29, a helical structure equipped with turns 20', like the one provided in the variant of fig. 6, which is completely analogous to the previously described advance device 15.

In both embodiments, both in the case in which the movement device 27 is configured as a piston 29, and also in the case in which the movement device 27 is configured as the helical structure, the overall transverse dimension of the movement device 27 is approximately equal to the diameter of the feed ducts 16, in particular slightly smaller than the latter to allow the movement of the advance means while simultaneously preventing the material M from accumulating, and stopping, in the ducts.

In all the embodiments described here, the apparatus 10 can comprise a plurality of heating elements 30a uniformly distributed in the containing chamber 13 and able to heat the reaction chamber 11 and the materials M present therein by thermal conduction radially from the outside toward the inside.

In addition, or alternatively, as well as the heating elements 30a disposed in the containing chamber 13, the apparatus 10 can also comprise one or more heating elements 30b disposed inside the central shaft 21 and able to heat the reaction chamber 11 and the materials M present therein by thermal conduction from the inside toward the outside, thus optimizing the heat treatment process, see fig. 5.

Preferably, the heating elements 30a, 30b can be thermistors.

Alternatively, according to another variant not shown, instead of the heating elements 30a, 30b the heating of the reaction chamber 11 and of the materials M present therein can be achieved by means of a heat vector V, passing inside the containing chamber 13.

We must clarify that also the containing chamber 13 and the reaction chamber 11 are preferably insulated, in a manner known in the art, to prevent any heat loss to the outside.

We must also specify that according to other variants, not shown, the apparatus 10 can also comprise two or more feed ducts 16, wherein one can be connected perpendicular or parallel to the reaction chamber 11 and another can be connected at the upper part thereof. The use of one or the other of the feed ducts 16 described above can be linked to the very nature of the materials M to be treated.

The operation of the apparatus 10, 10', which corresponds to the method according to the present invention, comprises the following steps.
- feeding the materials into the reaction chamber 11 by means of the feed duct 16,
- by means of the rotation of the advance device 15, equipped with the turns 20, making the materials M advance into the reaction chamber toward the outlet duct 17 through which the solid component resulting from the pyrolysis of the treated materials is disposed of,
- conveying the gaseous substances S inside the central shaft 21, for example by means of the through apertures 18,
- directing the flow of gaseous substances S conveyed inside the central shaft 21 in counter-current with respect to the direction of advance of the materials M in the reaction chamber.

The counter-current flow is directed by making the movement device 27 rotate around the central axis AC so that its turns 20', by rotating, make the gaseous substances advance toward the additional outlet duct 19.

During the directing step, there is provided a step of disposal of any residues of the solid component resulting from the pyrolysis of the treated materials that the gaseous substances have carried inside the central shaft, wherein the disposal step provides that these residues advance in the opposite direction with respect to the counter-current flow of the gaseous substances S so that, respectively, the former are conveyed toward the outlet duct 17 (arrow R in fig. 3) and the latter are conveyed toward an additional outlet duct 19 for the gaseous substances.

It is clear that modifications and/or additions of parts may be made to the apparatus 10, 10' as described heretofore, without thereby departing from the field and scope of the present invention, as defined by the claims.

It is also clear that, although the present invention has been described with reference to some specific examples, a person of skill in the art will be able to achieve other equivalent forms of apparatuses for the heat treatment of materials, having the characteristics as set forth in the claims and hence all coming within the field of protection defined thereby.

For example, the section of the reaction chamber 11 can have an elliptical or oval shape, or a profile comprising curved segments connected to each other, or connected by means of straight segments.

In another embodiment, not shown, the reaction chamber 11 can have a "figure 8" shape, obtained through the interpenetration of two circles, wherein the advance device 15 can be received in the zone of the reaction chamber 11 corresponding to the lower circle, having a diameter D1 slightly smaller than the diameter of that circle. In the following claims, the sole purpose of the references in brackets is to facilitate their reading and they must not be considered as restrictive factors with regard to the field of protection defined by the claims.

## Claims

1. Apparatus (10; 10') for the heat treatment of materials (M) comprising both a reaction chamber (11) configured to receive materials (M) to be treated and provided with an advance device (15) configured to make said materials (M) fed by at least one feed duct (16) advance toward at least one outlet duct (17) for the disposal of the solid component resulting from the pyrolysis of the treated materials (M), and also a furnace (12) having a containing chamber (13) which at least partly encloses said reaction chamber (11) and is configured to heat said reaction chamber (11) and said materials (M) present therein by thermal conduction, generating gaseous substances (S) therein, wherein said advance device (15) comprises a helical structure formed by a plurality of turns (20) and a central shaft (21) to which said turns (20) are attached, which is rotatable around a central axis (AC) and able to make said turns (20) rotate, thus making said materials (M) advance, **characterized in that** said central shaft (21) is internally hollow and is configured to receive said gaseous substances (S) which are generated in said reaction chamber (11), wherein said central shaft (21) comprises at least one through aperture (18) through which said gaseous substances (S) can enter inside said central shaft (21).

2. Apparatus (10; 10') as in claim 1, **characterized in that** inside said central shaft (21) there is disposed a movement device (27) comprising both a continuous helical structure formed by a plurality of turns (20') and also a longitudinal bar (28), to which said turns (20') are attached, which is parallel, coaxial and rotatable around said central axis (AC) to set said turns (20') in motion.

3. Apparatus (10; 10') as in claim 1 or 2, **characterized in that** said turns (20) comprise one or more apertures (26) defining passage means (22) disposed in proximity to or in correspondence with at least one perimeter portion (23) of said reaction chamber (11) and configured so that said gaseous substances (S) can pass through them.

4. Apparatus (10') as in claim 3, **characterized in that** said one or more apertures (26) are made in proximity to or in correspondence with the external edge of said turns (20) so that the apertures (26) made on one turn (20) are angularly offset with respect to the apertures (26) made on the adjacent turn (20), with reference to said central axis (AC).

5. Apparatus (10) as in any claim hereinbefore, **characterized in that** said advance device (15) is disposed eccentrically with respect to said reaction chamber (11) and is coaxial to said central axis (AC), which is vertically aligned and horizontally offset downward, by a certain eccentricity distance (DC), with respect to a longitudinal axis (AV) of said reaction chamber (11).

6. Apparatus (10; 10') as in any claim hereinbefore, **characterized in that** said at least one feed duct (16) comprises inside it a movement device (27) configured as a rotatable helical structure formed by a plurality of turns (20'), or configured as a piston (29) sliding back and forth, and it is disposed to make said materials (M) to be treated advance and introduce them into said reaction chamber (11) in a manner coordinated with a rotation of said advance device (15).

7. Apparatus (10) as in any claim hereinbefore, **characterized in that** it comprises an additional outlet duct (19) for the disposal of the gaseous substances (S) which is disposed in proximity to said feed duct (16).

8. Apparatus (10) as in any claim hereinbefore, **characterized in that** said reaction chamber (11) comprises a seating (24) created on an internal wall thereof and configured to receive at least one temperature measurement sensor (25).

9. Apparatus (10) as in any claim hereinbefore, **characterized in that** it comprises a plurality of heating elements (30a) disposed radially and uniformly in said containing chamber (13) and able to heat said reaction chamber (11) and the materials (M) present therein by thermal conduction from the outside toward the inside.

10. Apparatus (10) as in any claim hereinbefore, **characterized in that** it further comprises one or more additional heating elements (30b) disposed inside said central shaft (21) able to heat said reaction chamber (11) and the materials (M) present therein by thermal conduction from the inside toward the outside.

11. Apparatus (10) as in any claim hereinbefore, wherein said feed duct (16) and said outlet duct (17) for said materials (M) are disposed in correspondence with opposite ends of said reaction chamber (11).

12. Method for the heat treatment of materials (M) in an apparatus (10; 10') as in any claim hereinbefore, comprising the following steps:
- feeding said materials (M) into a reaction chamber (11) by means of a feed duct (16),
- by means of an advance device (15) comprising a helical structure formed by a plurality of turns (20), making said materials (M) advance in said reaction chamber (11) toward an outlet duct (17) through which the solid component resulting from the pyrolysis of the treated materials (M) is disposed of, wherein said making said materials (M) advance provides to make a central shaft (21), to which said turns (20) are attached, rotate around a central axis (AC),
**characterized in that** it also comprises the following steps:
- conveying the gaseous substances (S) inside a central shaft (21) of said advance device (15), to which said turns (20) are attached,
- directing a flow of said gaseous substances (S) conveyed inside said central shaft (21) in counter-current to the direction of advance of said materials (M) in the reaction chamber (11).

13. Method as in claim 12, **characterized in that** said directing step provides to drive a movement device (27) in rotation around said central axis (AC), said movement device (27) comprising both a continuous helical structure formed by a plurality of turns (20') and also a longitudinal bar (28), to which said turns (20') are attached, which is parallel, coaxial and rotatable around said central axis (AC).

14. Method as in claim 12 or 13, **characterized in that** during said directing step, there is provided a step of disposal of any residues of the solid component resulting from the pyrolysis of the treated materials (M) that the gaseous substances (S) have carried inside said central shaft (21), wherein the disposal step provides that said residues advance in the opposite direction with respect to the counter-current flow of said gaseous substances (S), so that, respectively, the former are conveyed toward said outlet duct (17) and the latter are conveyed toward an additional outlet duct (19) for said gaseous substances (S).
